Europäisches Patentamt

European Patent Office

Office européen des brevets

(19)

(11) Numéro de publication : **0 060 813
B1**

# (12) FASCICULE DE BREVET EUROPÉEN

(45) Date de publication du fascicule du brevet :
**13.06.84**

(51) Int. Cl.³ : **F 24 J   3/02**

(21) Numéro de dépôt : **82810117.0**

(22) Date de dépôt : **16.03.82**

(54) **Pompe à chaleur.**

(30) Priorité : **18.03.81 CH 1824/81**

(43) Date de publication de la demande :
**22.09.82 Bulletin 82/38**

(45) Mention de la délivrance du brevet :
**13.06.84 Bulletin 84/24**

(84) Etats contractants désignés :
**BE CH DE FR GB IT LI LU NL**

(56) Documents cités :
**DE-A- 2 638 495
FR-A- 1 151 342
FR-A- 2 310 539
FR-A- 2 398 980
FR-A- 2 460 459**

(73) Titulaire : **BATTELLE MEMORIAL INSTITUTE
7 route de Drize
CH-1227 Carouge/Genève (CH)**

(72) Inventeur : **Trouilhet, Yves
Chemin des Tattes 4B
CH-1222 Vésenaz (CH)**
Inventeur : **Houlmann, Nicolas
38, chemin d'Eysins
CH-1260 Nyon (CH)**
Inventeur : **Vollerin, Bernard
59, rue de Lyon
CH-1203 Genève (CH)**

(74) Mandataire : **Dousse, Blasco et al
7, route de Drize
CH-1227 Carouge/Genève (CH)**

Jouve, 18, rue St-Denis, 75001 Paris, France

EP 0 060 813 B1

## Description

L'invention se rapporte à une pompe à chaleur utilisant l'air comme source froide dans laquelle le liquide frigorigène circule dans un évaporateur associé à un échangeur de chaleur à travers lequel de l'air est envoyé en circulation forcée.

Il a déjà été proposé une telle pompe à chaleur. Le problème de ces pompes utilisant la chaleur de l'air provient essentiellement du givrage à la surface de l'évaporateur, causé par l'humidité contenue dans l'air qui se condense et gèle, comme ceci se produit dans le compartiment à glace d'un réfrigérateur. Habituellement ce problème est résolu en inversant périodiquement le cycle de la pompe à chaleur. Toutefois cette solution diminue le coefficient de performance de la pompe à chaleur.

On a déjà proposé de combiner un capteur solaire avec la source froide d'une pompe à chaleur. A cet effet, on utilise un circuit intermédiaire de stockage thermique parcouru par un fluide tel que l'eau que l'on stocke dans un réservoir d'accumulation dans lequel se trouve l'évaporateur du circuit de liquide frigorigène de la pompe à chaleur. Ce capteur solaire est également combiné à un échangeur de chaleur par convection naturelle de l'air en l'absence d'ensoleillement. Compte tenu du coefficient de transfert très faible de l'ordre de 12 W/m² °C de l'échangeur par convection naturelle, la surface du capteur doit être très élevée de sorte qu'il en résulte une différence énorme entre les flux d'énergie du capteur solaire et la convection naturelle de l'air. Compte tenu de la très grande surface nécessaire, une telle solution occupe généralement la surface du toit et est réservée exclusivement à des constructions neuves.

On a également proposé dans le brevet suisse N° 620 284 de séparer le capteur solaire de l'échangeur de chaleur par convection et de munir cet échangeur de chaleur d'une circulation forcée d'air. Une vanne permet de commuter l'écoulement de liquide de stockage thermique du capteur solaire à l'échangeur de chaleur par convection et vice-versa. Une telle solution est relativement complexe puisqu'elle nécessite un système de régulation pour commander la vanne de commutation.

En outre, les deux dernières solutions mentionnées utilisent un fluide intermédiaire pour stocker la chaleur ce qui suppose une importante tuyauterie et deux échangeurs en série entre la source initiale de chaleur et la pompe à chaleur et donc un rendement global réduit en raison de l'addition des pertes d'échange de chacun des deux échangeurs. La présence d'un liquide intermédiaire de stockage thermique nécessite par ailleurs un circuit de circulation de ce fluide et un réservoir calorifugé ce qui renchérit sensiblement l'installation.

La demande de brevet FR 2 310 539 se rapporte à un capteur solaire avec circulation d'air forcée, réglable en fonction de la température de l'air. Le fluide caloporteur circulant dans le capteur solaire est transporté à un échangeur de chaleur constituant l'évaporateur d'une pompe à chaleur. Dans ce cas, la pompe fonctionne constamment quand les conditions climatiques sont favorables, un stockage étant prévu pour le liquide chauffé par le condensateur de la pompe à chaleur. En outre, une portion de la paroi délimitant un canal pour l'écoulement de l'air constitue une surface collective des rayons solaire ayant traversés un revêtement en verre. Une telle installation est relativement complexe et donc chère et comporte comme les précédentes un circuit intermédiaire entre le capteur solaire et l'évaporateur de la pompe à chaleur.

Enfin, la demande de brevet FR 2 460 459 propose de placer directement l'évaporateur d'une pompe à chaleur dans un boîtier dont une face est vitrée pour permettre d'exposer l'évaporateur aux rayons du soleil, ce boîtier présentant de plus des ouvertures d'admission et de sortie ainsi qu'un ventilateur pour faire circuler l'air atmosphérique à travers l'évaporateur de manière à produire une convection forcée.

L'inconvénient d'une telle solution provient du fait que la surface de captage solaire, constituée par l'échangeur de chaleur associé à l'évaporateur, est recouvert d'une vitre qui forme l'une des parois du boîtier délimitant l'écoulement d'air destiné à fournir de la chaleur par convection. Or cette vitre, de même que celle prévue dans le capteur solaire décrit dans le FR-A-2 310 539, crée par réflexion une perte de rendement pour les bas niveaux de température d'évaporation, auxquels le rendement de l'absorbeur est normalement le meilleur. Par conséquent, la réflexion des rayons incidents engendrée par la présence de la vitre pénalise le rendement dans la plage de températures d'évaporation la plus intéressante. Il ne faut pas oublier que le rendement de l'absorption au niveau de l'évaporateur est une fonction linéaire de l'écart entre la température d'évaporation et la température ambiante. Si on considère une installation de chauffage d'appoint fonctionnant lorsque la température ambiante est comprise entre + 4 et 15 °C, et que la température d'évaporation est de préférence aussi basse que possible (la limite inférieure étant définie par la température de condensation de l'humidité de l'air), il est évident que l'écart entre la température d'évaporation et la température ambiante est au plus que faiblement positif et le plus souvent nul ou négatif. C'est précisément dans ce domaine de températures que la présence de la vitre diminue le rendement de l'absorption de l'évaporateur.

La présente invention vise à remédier, au moins en partie, aux inconvénients des solutions susmentionnées.

A cet effet, cette invention a pour objet une pompe à chaleur selon la revendication 1.

Le fait qu'une portion de la paroi du canal de circulation d'air constitue une surface collectrice d'énergie solaire permet d'associer l'évaporateur à deux sources de chaleur en obtenant les meilleures conditions d'échange dans les deux cas lorsque la pompe à chaleur est essentiellement destinée à chauffer un circuit d'eau de chauffage central.

D'autres avantages apparaîtront au cours de la description qui va suivre illustrée par le dessin annexé qui représente, schématiquement et à titre d'exemple, une forme d'exécution et une variante de la pompe à chaleur objet de la présente invention.

La figure 1 est un schéma de cette pompe à chaleur.

La figure 2 est une vue en coupe transversale d'un échangeur de chaleur associé à l'évaporateur de cette pompe à chaleur.

La figure 3 est une vue en coupe transversale d'une variante de l'échangeur de chaleur associé à l'évaporateur de la pompe à chaleur.

La figure 4 est un diagramme relatif au dimensionnement de l'évaporateur.

La figure 5 est un diagramme relatif au rendement de deux types de capteurs solaires.

La figure 6 est un schéma de la pompe à chaleur avec les symboles utilisés pour calculer son rendement global.

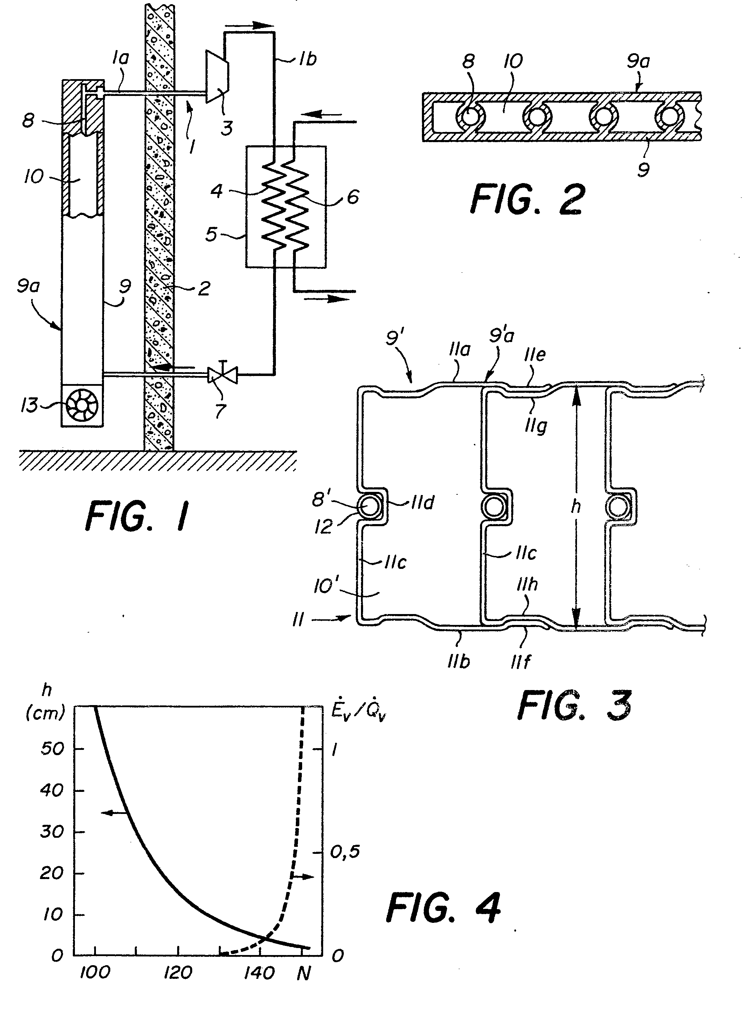

La pompe à chaleur illustrée par la fig. 1 comporte un circuit 1 pour le liquide frigorigène, dont une partie 1a s'étend à l'extérieur du bâtiment à chauffer, symbolisé par un mur 2, et dont une partie 1b s'étend à l'intérieur de ce même bâtiment. Cette dernière partie 1b du circuit comporte un compresseur 3, un condenseur 4 associé à un échangeur de chaleur 5 dans lequel passe un conduit 6 de circulation d'un fluide caloporteur d'une installation de chauffage central par exemple. Une vanne de détente 7 est disposée à la sortie du condenseur 4. La partie 1a du circuit 1 se divise en une pluralité de canaux formant l'évaporateur 8 associé à un échangeur de chaleur 9 traversé par des canaux de circulation d'air 10. Un ventilateur 13 commande cette circulation d'air à travers ces canaux.

L'échangeur de chaleur 9 est conçu pour fonctionner par convection d'air forcée à travers les canaux 10 ou en captant la chaleur du soleil par sa face 9a. A cet effet cet échangeur de chaleur 9 est réalisé en un matériau bon conducteur thermique. Selon la fig. 2, l'échangeur de chaleur 9 se présente sous la forme d'un profilé d'aluminium extrudé dans lequel les canaux formant l'évaporateur 8 alternent avec les canaux de circulation d'air 10. Chacun des canaux de l'évaporateur 8 est relié à la surface 9a de captage d'énergie solaire par le matériau thermiquement conducteur dont est formé le profilé servant d'échangeur de chaleur 9.

En variante, l'échangeur de chaleur 9' peut être réalisé selon le schéma de la fig. 3. Les canaux de l'évaporateur 8' et les canaux de circulation d'air 10' peuvent être réalisés par un assemblage d'éléments 11 en tôle emboutie et de tubes 12 de circulation du fluide frigorigène. Chaque élément 11 présente une section transversale rectangulaire délimitant un canal de circulation d'air 10' et présente un profil ouvert formé de deux branches parallèles 11a, 11b et d'une branche de liaison 11c munie d'une rainure 11d destinée à recevoir un tube 12. Les extrémités libres des branches parallèles 11a, 11b présentent chacune une partie rentrante 11e, 11f destinée à venir se crocher élastiquement dans deux décrochements 11g, 11h ménagés sur les branches parallèles 11a, 11b de l'élément adjacent 11, à proximité de la branche de liaison 11c. De cette façon, il est possible de dimensionner chaque échangeur 9' en fonction de la puissance désirée.

Le diagramme de la fig. 4 donne l'épaisseur (h) de l'échangeur 9' et la puissance du ventilateur $E_v$ par rapport à la puissance captée à l'évaporateur $Q_v$, en fonction du nombre N d'éléments 11, pour une puissance $Q_v$ de 10 kW, un flux d'énergie solaire de 1 000 W/m² et un $\Delta T$ de l'air traversant l'échangeur de 5 °C plus précisément de + 8 °C à + 3 °C.

Compte tenu de ces données de base, il est possible, en choisissant une épaisseur (h) pour l'échangeur 9' de calculer les différents paramètres relatif à cet échangeur 9' ainsi qu'au ventilateur 13 utilisé pour effectuer la convexion forcée de l'air à travers les canaux de circulation d'air 10'.

Exemple 1

L'épaisseur h de l'échangeur 9' est de 3,5 cm.

La longueur des canaux 8' et 10' est de 3,15 m.

La surface 9'a de captage solaire est de 10 m².

Le volume de l'échangeur 9' est de 0,35 m³.

Le nombre d'éléments 11 est de 142.

La surface de convection est de 31,5 m².

La température d'évaporation du fluide frigorigène est de 0 °C.

La vitesse de l'écoulement d'air est de 15 m/s.

Le coefficient de transfert par convection est tiré de « Compact Heat Exchangers » N.M. Kays & A.L. London et est de 62 W/m² °C.

La chute de pression à travers les canaux de circulation d'air 10' est de 4 mbar.

L'écoulement d'air est de 5 730 m³/h.

La puissance du ventilateur est de 850 W.

La puissance du ventilateur est due à la perte de charge à travers les canaux de circulation d'air 10'. Par conséquent, il est possible de réduire cette perte de charge en augmentant l'épaisseur h de l'échangeur 9'.

## Exemple 2

L'épaisseur h de l'échangeur est de 6,1 cm.

La longueur des canaux 8' et 10' est de 3,15 m.

La surface 9a de captage solaire est de 10 m².

Le volume de l'échangeur est de 0,6 m³.

Le nombre d'éléments est de 100.

La surface de convection est de 38,5 m².

La température d'évaporation du fluide frigorigène est de − 2 °C.

La vitesse de l'écoulement d'air est de 8,5 m/s.

Le coefficient de transfert par convection est de 36 W/m² °C.

La chute de pression à travers les canaux de circulation d'air est de 0,85 mbar.

L'écoulement d'air est de 5 730 m³/h.

La puissance du ventilateur est de 180 W.

On voit qu'en augmentant de moins du double l'épaisseur de l'échangeur 9' et avec un fluide frigorigène s'évaporant 2 °C au-dessous de celui de l'exemple 1, on réduit presque de 5 fois la puissance nécessaire pour le ventilateur.

La section des canaux 10' est de 5,7 × 3,0 cm en admettant une épaisseur de tôle de 2 mm.

## Exemple 3

L'épaisseur h de l'écoulement 9' est de 12 cm.

La longueur des canaux 8' et 10' est de 3,15 m.

La surface de captage solaire est de 10 m².

Le volume de l'échangeur est de 1,3 m³.

Le nombre d'éléments est de 130.

La surface de convection est de 98,2 m².

La température d'évaporation du fluide frigorigène est de 0 °C.

La vitesse de l'écoulement d'air est de 4,4 m/s.

Le coefficient de transfert par convection est de 20 W/m² °C.

La chute de pression à travers les canaux de circulation d'air est de 0,26 mbar.

La puissance du ventilateur est de 55 W.

La section des canaux 10' est 11,6 × 2,3 cm compte tenu d'une épaisseur de tôle de 2 mm.

Dans tous les exemples, les écoulements d'air dans les canaux de circulation 10, 10' et de fluide frigorigène dans les canaux 8, 8' de l'évaporateur se produisent à contre-courant de manière à obtenir un rendement optimal. En outre la puissance délivrée par la pompe à chaleur peut être modulée en variant le débit d'air à travers les canaux 10, 10' par un ajustement de la vitesse du ventilateur 13.

Dans la forme d'exécution illustrée et décrite ici, l'échangeur de chaleur 9 ou 9' est conçu pour être placé contre un mur de façade d'une maison. Par sa conception et compte tenu des sources de chaleur air et soleil utilisées, la pompe à chaleur selon l'invention est destinée à constituer essentiellement un élément de chauffage d'appoint associé notamment à une chaudière classique au fuel ou au charbon ou à une installation de stockage d'énergie thermique chauffée au courant de nuit pour le chauffage d'une maison familiale. Cette pompe à chaleur est notamment adaptée pour être associée à des chaudières de maisons existantes. En effet, si l'on se reporte aux exemples précédents, on constate qu'il suffit de disposer de 10 m² d'une façade exposée au sud, sud-ouest pour une puissance nominale de 10 kW. Dans des régions climatiques à hivers modérément froids de la majeur partie de l'Europe, on peut évaluer qu'une telle pompe à chaleur est capable de fournir 50 % de la puissance maximale de chauffage et 60 % de l'énergie de chauffage annuelle y compris l'énergie nécessaire au chauffage de l'eau chaude sanitaire. Si la solution proposée est à première vue moins performante qu'une pompe à chaleur utilisant la chaleur du sol ou de la nappe phréatique, l'investissement nécessaire est également très inférieur. En outre les solutions utilisant la nappe phréatique sont subordonnées à des conditions particulières, principalement la proximité de cette nappe, ainsi que l'autorisation de l'exploiter. Par contre, si la température de l'air est plus variable et permet d'atteindre un coefficient de performance plus faible, l'air est disponible librement partout. En outre l'association de l'évaporateur de la pompe à chaleur au captage d'énergie solaire incidente permet de résoudre le problème du givrage, tout en augmentant sensiblement le coefficient de performance.

Il faut encore remarquer que l'échangeur de chaleur décrit et illustré par les exemples précédents a une épaisseur variant de 3,5 à 12 cm ce qui est extrêmement faible. En outre les deux modes de construction décrits permettent d'adapter l'échangeur à l'espace disponible étant donné qu'il est possible de varier aussi bien la longueur que la largeur de cet échangeur lors de la fabrication.

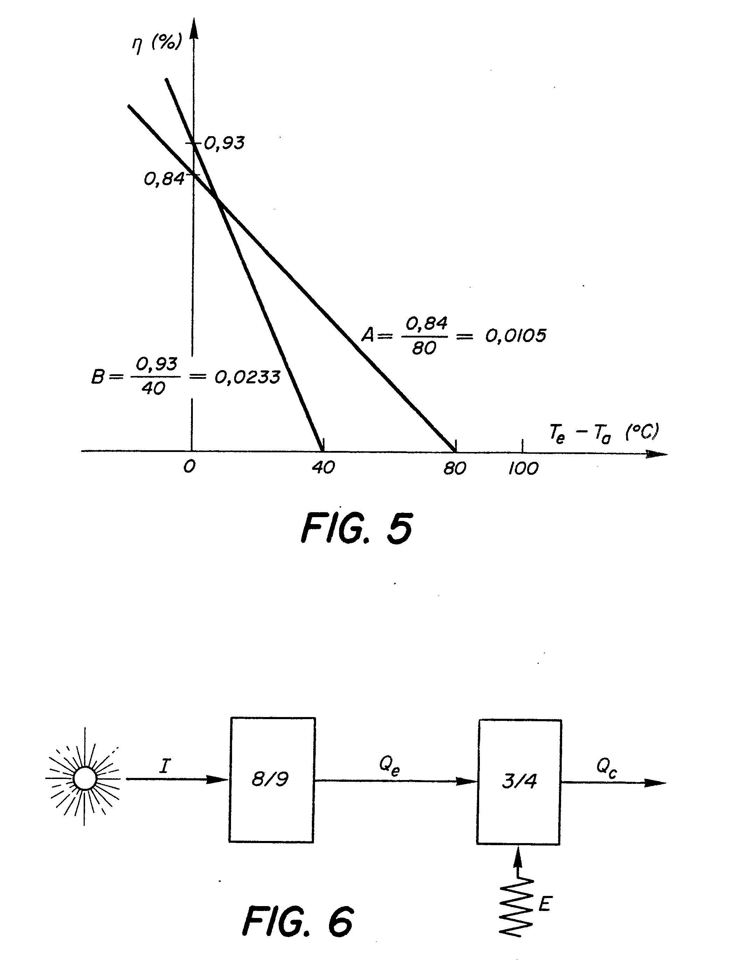

Comme on l'a mentionné précédemment, le rendement d'absorption de l'énergie solaire de l'évaporateur décrit est sensiblement supérieur à celui d'un capteur solaire à vitre pour la gamme de températures à laquelle cet évaporateur est destiné à travailler. Le diagramme de la fig. 5 représente en ordonnée le rendement de deux capteurs solaires, l'un A avec vitrage et l'autre B selon l'invention, en fonction de la différence $T_e − T_a$ entre la température d'évaporation et la température ambiante. Le

4

rendement de A a été tiré de Solarthermische Heizungssysteme de Herbert Grallert (Oldenburg Verlag München Wien 1977). Le rendement optique de 0,93 de B provient de la même publication, la pente de B provient de mesures que nous avons effectuées. On constate que la pente du rendement de A est plus faible que celle de B et que les droites A et B se croisent pour une différence $T_e - T_a$ de l'ordre de 7 °C, au-dessous de laquelle le rendement de B croît constamment par rapport à celui de A. Or si on considère les exemples précédents, la température d'évaporation se situe autour de 0 °C et la température minimum à laquelle peut travailler la pompe est + 4 °C, de ce fait, la différence $T_e - T_a$ est pratiquement toujours inférieure à 0 °C, d'où l'intérêt du capteur évaporateur selon l'invention qui permet d'accroître de façon significative le rendement du captage solaire.

Le schéma bloc de la fig. 6 illustre le principe de la pompe à chaleur sur lequel on retrouve le capteur évaporateur 8-9, le compresseur 3 et le condenseur 4 sur lequel on a indiqué les différents paramètres entrant dans le calcul de son coefficient de performance COP.

I correspond au flux d'évaporation

$Q_e$ correspond à la chaleur d'évaporation

$Q_c$ correspond à la chaleur de condensation

E correspond à la puissance électrique du compresseur.

Le rendement du capteur solaire correspond à :

$$\eta = \frac{Q_e}{I} \qquad (1)$$

Quant au coefficient de performance de la pompe à chaleur seule il peut être exprimé par

$$COP = \frac{Q_c}{E} = 1 + \frac{Q_e}{E} = \frac{Q_c}{Q_c - Q_e} = \frac{1}{1 - \dfrac{Q_e}{Q_c}}$$

$$1 - \frac{Q_e}{Q_c} = \frac{1}{COP}$$

$$\frac{Q_e}{Q_c} = 1 - \frac{1}{COP} = \frac{COP - 1}{COP} \qquad (2)$$

Le rendement global du système capteur solaire pompe à chaleur exprimé en fonction de (1) et (2) correspond à :

$$\frac{Q_c}{I} = \frac{Q_c}{Q_e} \cdot \frac{Q_e}{I} = \frac{COP}{COP - 1} . \eta$$

$$\eta_B = 0,93 - 0,023\,3\,(T_e - T_a)$$

$$\eta_A = 0,84 - 0,010\,5\,(T_e - T_a)$$

En admettant un COP de 40 % du COP de Carnot :

$$COP = 0,4\,\frac{T_c + 273}{T_c - T_e}$$

avec

$T_c = 50$ °C (température de condensation)

$T_a = 10$ °C (température ambiante)

$T_e =$ température évaporateur

on obtient les rendements $Q_c/I$ suivants :

| Te | $Q_c/I$ | |
|---|---|---|
| | capteur sans vitre (B) | capteur avec vitre (A) |
| − 15 | 3,04 | 2,22 |
| − 10 | 2,61 | 1,96 |
| − 5 | 2,33 | 1,74 |
| 0 | 1,90 | 1,54 |
| 5 | 1,61 | 1,37 |
| 10 | 1,35 | 1,22 |
| 15 | 1,12 | 1,08 |
| 20 | 0,91 | 0,96 |

**0 060 813**

On constate que le rendement est d'autant meilleur avec un capteur selon l'invention (B) que la température d'évaporation est basse. Or on a vu dans les exemples qu'il est avantageux de travailler à une température d'évaporation aussi basse que possible, la limite étant fixée par la condensation. Entre $T_e - 15\,°C$ et $0\,°C$ le gain du capteur selon l'invention par rapport au capteur à vitre varie de $+ 37\,\%$ à $+ 23\,\%$. Cette dernière valeur correspond à une puissance globale de la pompe à chaleur de 1 425 $W/m^2$ dans le cas du capteur selon l'invention contre 1 155 $W/m^2$ pour un capteur à vitre pour une insolation de 750 $W/m^2$.

## Revendications

1. Pompe à chaleur dans laquelle un circuit de fluide frigorigène comporte un évaporateur et un condenseur, associés chacun à un échangeur de chaleur, un détendeur et un compresseur, l'échangeur de chaleur associé à l'évaporateur comportant au moins un premier canal de circulation du fluide frigorigène et au moins un second canal dont les extrémités s'ouvrent vers l'atmosphère, associé à des moyens de circulation forcée de l'air, ces premier et second canaux étant adjacents l'un à l'autre, cet évaporateur étant de plus associé à une surface collectrice d'énergie solaire, caractérisée par le fait que cette surface collectrice d'énergie solaire est en contact direct avec l'atmosphère pour recevoir les rayons solaires ne traversant que l'atmosphère et constitue la partie avant de la paroi dudit second canal par rapport à la trajectoire de ces rayons solaires, une structure en un matériau thermiquement conducteur reliant la partie avant de cette paroi audit premier canal.

2. Pompe à chaleur selon la revendication 1, caractérisée par le fait que ledit échangeur associé à l'évaporateur comporte une pluralité desdits premiers canaux, en alternance avec une pluralité desdits seconds canaux les moyens de circulation d'air étant agencés pour faire circuler l'air dans les seconds canaux, dans le sens opposé à celui dudit fluide frigorigène dans les premiers canaux.

3. Pompe à chaleur selon la revendication 1, caractérisée par le fait que lesdits premier et second canaux sont parallèles et rectilignes.

4. Pompe à chaleur selon la revendication 3, caractérisée par le fait que lesdits canaux sont venus d'une pièce avec ledit échangeur, par extrusion.

5. Pompe à chaleur selon la revendication 3, caractérisée par le fait que lesdits seconds canaux sont formés par des profilés emboitables les uns dans les autres et comprenant chacun, en coupe transversale, deux branches parallèles reliées par une branche transversale associée à l'un desdits premiers canaux, les extrémités libres de ces branches parallèles étant agencées pour s'emboîter sur les extrémités des branches parallèles du profil adjacent, rattachées à ladite partie transversale.

6. Pompe à chaleur selon la revendication 1, caractérisée par le fait que les moyens de circulation d'air forcée ont un débit réglable.

## Claims

1. Heat pump in which a coolant fluid circuit comports an evaporator and a condenser, each being associated with a heat-exchanger, a pressure-reducer and a compressor, the heat-exchanger associated with the evaporator comporting at least a first coolant fluid circulating channel and at least a second channel whose ends open into atmosphere associated with forced-air circulation means, these first and second channels being adjacent each other, this evaporator being furthermore associated with a solar energy collecting surface, characterized by the fact that this solar energy collecting surface directly contacts the atmosphere for only receiving the sun rays traversing the atmosphere and constitutes the front portion of said second channel's wall this being with respect to the path of these sun rays, a structure made of a thermally conductive material connecting this wall's front portion to said first channel.

2. Heat pump according to claim 1, characterized by the fact that said exchanger associated with the evaporator comports a plurality of said first channels alternating with a plurality of said second channels, the air circulation means being arranged to cause the air to circulate in the second channels in a direction opposite to that of said coolant fluid in the first channels.

3. Heat pump according to claim 1, characterized by the fact that said first and second channels are linear and parallel.

4. Heat pump according to claim 3, characterized by the fact that said channels are integral with said exchanger, the whole being manufactured by extrusion.

5. Heat pump according to claim 3, characterized by the fact that said second channels are formed from laminated sections fitted together each comprising, seen cut transversally, two parallel limbs connected by a transverse limb associated with one of said first channels, the free ends of these parallel limbs being arranged to fit and hold on the ends of the parallel limbs of the adjacent section attached to said transverse portion.

6. Heat pump according to claim 1, characterized by the fact that the forced air-circulation means are rate adjustable.

6

**0 060 813**

**Ansprüche**

1. Wärmepumpe, in der ein Kältemittelfluid-Kreislauf einen Verdampfer und einen Kondensator, die jeder an einen Wärmeaustauscher angeschlossen sind, ein Druckminderventil und einen Kompressor aufweist, wobei der an den Verdampfer angeschlossene Wärmeaustauscher mindestens einen ersten Umlaufkanal für das Kältmittelfluid und mindestens einen zweiten Kanal, dessen Enden sich zur Atmosphäre öffnen, aufweist, der mit Mitteln für den Zwangsumlauf der Luft verbunden ist, wobei der erste und der zweite Kanal nebeneinander liegen und der Verdampfer außerdem an eine Sammelfläche für Sonnenenergie angeschlossen ist, dadurch gekennzeichnet, daß die Sammelfläche für Sonnenenergie in unmittelbarer Berührung mit der Atmosphäre steht, um die nur die Atmosphäre durchquerenden Sonnenstrahlen aufzufangen, und den Teil vor der Wand des zweiten Kanals in bezug auf die Sonnenstrahlenbahn bildet, wobei eine Struktur aus einem thermisch leitenden Material den Teil vor der Wand mit dem ersten Kanal verbindet.

2. Wärmepumpe nach Anspruch 1, dadurch gekennzeichnet, daß der mit dem Verdampfer verbundene Austauscher eine Vielzahl der ersten Kanäle abwechselnd mit einer Vielzahl der zweiten Kanäle aufweist, wobei die Mittel zum Luftumlauf so angeordnet sind, um die Luft in den zweiten Kanälen in entgegengesetzter Richtung zu derjenigen des Kältemittelfluids in den ersten Kanälen umlaufen zu lassen.

3. Wärmepumpe nach Anspruch 1, dadurch gekennzeichnet, daß die ersten und die zweiten Kanäle parallel und geradlinig sind.

4. Wärmepumpe nach Anspruch 3, dadurch gekennzeichnet, daß die Kanäle aus einem Stück mit dem Austauscher mittels Extrudierens gefertigt sind.

5. Wärmepumpe nach Anspruch 3, dadurch gekennzeichnet, daß die zweiten Kanäle aus ineinanderfügbaren Profilen gebildet sind und jeweils im Querschnitt zwei parallele Schenkel aufweisen, die durch einen Quersteg verbunden sind, der an einen der ersten Kanäle angeschlossen ist, wobei die freien Enden dieser parallelen Schenkel so angeordnet sind, daß sie sich über den Enden der parallelen Schenkel des nebenliegenden Profils, die an den Quersteg angesetzt sind, ineinanderfügen.

6. Wärmepumpe nach Anspruch 1, dadurch gekennzeichnet, daß die Mittel für den Zwangsumlauf der Luft eine regulierbare Durchflußmenge haben.

FIG. 1

FIG. 2

FIG. 3

FIG. 4

FIG. 5

FIG. 6

2